(19) **Europäisches Patentamt European Patent Office Office européen des brevets**

(11) **EP 3 057 161 B1**

(12) **EUROPEAN PATENT SPECIFICATION**

(45) Date of publication and mention of the grant of the patent:
**05.12.2018 Bulletin 2018/49**

(51) Int Cl.:
*H01M 4/88* (2006.01)    *H01M 4/86* (2006.01)
*H01M 4/92* (2006.01)    *H01M 8/1018* (2016.01)

(21) Application number: **14852600.7**

(22) Date of filing: **09.10.2014**

(86) International application number:
**PCT/JP2014/077056**

(87) International publication number:
**WO 2015/053362 (16.04.2015 Gazette 2015/15)**

(54) **FUEL-CELL ELECTRODE CATALYST, AND PRODUCTION METHOD THEREFOR**

BRENNSTOFFZELLENELEKTRODENKATALYSATOR UND HERSTELLUNGSVERFAHREN DAFÜR

CATALYSEUR D'ÉLECTRODE DE PILE À COMBUSTIBLE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2013 JP 2013211859**

(43) Date of publication of application:
**17.08.2016 Bulletin 2016/33**

(73) Proprietor: **Catalar Corporation Shizuoka 437-1492 (JP)**

(72) Inventors:
• **ISHIDA Tomohiro**
  **Kakegawa-shi**
  **Shizuoka 437-1492 (JP)**
• **TERADA Tomoaki**
  **Kakegawa-shi**
  **Shizuoka 437-1492 (JP)**
• **KATAOKA Mikihiro**
  **Kakegawa-shi**
  **Shizuoka 437-1492 (JP)**

(74) Representative: **J A Kemp**
  **14 South Square**
  **Gray's Inn**
  **London WC1R 5JJ (GB)**

(56) References cited:
**WO-A2-2006/110822    JP-A- S6 349 252**
**JP-A- H02 210 761    JP-A- 2006 286 580**
**JP-A- 2010 061 917    US-A1- 2012 135 137**

• **YAMAMOTO T ET AL: "Synthesis of monodisperse platinum nanoparticles supported on carbon gel microspheres", JOURNAL OF NON-CRYSTALLINE SOLIDS, NORTH-HOLLAND PHYSICS PUBLISHING. AMSTERDAM, NL, vol. 352, no. 26-27, 1 August 2006 (2006-08-01), pages 2929-2932, XP028046238, ISSN: 0022-3093, DOI: 10.1016/J.JNONCRYSOL.2006.05.004 [retrieved on 2006-08-01]**

## Description

### Technical Field

The present invention relates to a fuel-cell electrode catalyst and a production method for the same. The present invention also relates to a fuel-cell electrode containing the fuel-cell electrode catalyst. Furthermore, the present invention relates to a fuel cell containing the fuel-cell electrode.

### Background Art

Fuel cells are power generators, from which electric power can be obtained successively via supplementation of fuel, and which impose only a small burden on the environment. With the recent increased interest in global environmental protection, there is high anticipation regarding fuel cells. Since fuel cells have a high degree of electrical efficiency and systems thereof can be miniaturized, the usability of fuel cells in various fields such as personal computers, portable devices such as cell phones, and vehicles such as cars and railway vehicles is expected.

A fuel cell is composed of a pair of electrodes (cathode and anode) and an electrolyte, and the electrodes contain a support and a catalyst metal supported on the support. As a support for fuel cell, carbon is conventionally used in general (for example, see Patent Document 1). As an electrode catalyst, a material in which a few nanometers of platinum is supported on a carbon having a structure in which primary particles with a primary particle size of several tens of nanometers are arranged in chains is generally used.

Patent document 2 describes a process for the preparation of an electrode catalytic layer material for an electrochemical device that involves contacting a carbon supported catalyst with a solution of an electrolyte to be used to conduct ions through a membrane, applying electrical fields to the carbon supported catalyst and the electrolyte contaning solution to form a catalyst and electrolyte composite, and drying the catalyst and electrolyte composite.

Patent document 3 describes the preparation of an alloy catalyst by preparing a platinum catalyst supported on carbon, coating the surface of the platinum catalyst with a conductive polymer, supporting a transition metal salt on the coated catalyst, and heat treating the catalyst on which the transition metal salt is supported.

Non-patent document 1 describes the fabrication of monodisperse platinum nanoparticles on carbon gel microspheres with a narrow pore size distribution, wherein the size of the platinum nanoparticles was almost coincident with the pore size of the carbon gel microspheres.

### Prior Art Documents

### Patent Documents

> Patent Document 1: JP Patent Publication (Kokai) No. 2013-109848 A
> Patent Document 2: PCT Patent Application No. 2006/110822 A2
> Patent Document 3: US Patent Publication No. 2012135137 A1

### Non-Patent Documents

Non-Patent Document 1: Yamamoto et al., J. Non-Cryst. Solids, 2006, 352(26), 2929-2932

### Summary of the Invention

### Technical Problem

A fuel-cell electrode catalyst can be produced such that a catalyst metal is supported on a support. As a method for supporting a catalyst metal on a support, for example, a sedimentation method that involves the use of a neutralization reaction against a mixture containing a catalyst metal, a support, and a dispersive medium; a precipitation method that involves the use of a reduction reaction of said mixture, and the like are known. However, it has been difficult with these methods for supporting a catalyst metal uniformly on a support.

If an electrode catalyst in which a catalyst metal is not uniformly supported on a support is used, sufficient performance of the fuel cell cannot be provided. Therefore, an object of the present invention is to provide a fuel-cell electrode catalyst in which a catalyst metal is uniformly supported on a support, and a method for producing the same.

**Means for Solving the Problem**

As a result of intensive studies, the present inventors have discovered that the use of both a support having a narrow particle size distribution and a catalyst metal complex having a mean particle size equivalent to the mean pore size of the support can achieve uniform adsorption of the catalyst metal complex onto the support. With subsequent processes, the catalyst metal can be uniformly supported on the support. The present invention is based on the finding that lowering a variation in primary particle size of the support is particularly effective in an adsorption-support method.

Specifically, the present invention includes the following [1] to [12].

[1] A fuel-cell electrode catalyst comprising a support having pores and a catalyst metal uniformly supported on the support, wherein
at least 80% of the support has a primary particle size within ± 75 % of the mean primary particle size of the support,
at least 80% of the support has a primary particle size ranging from 10 nm to 20 nm,
the catalyst metal supported on the support has a normalized dispersity of 24% or less, and
the support is carbon.

[2] The fuel-cell electrode catalyst according to [1], wherein the catalyst metal contains platinum.

[3] A fuel cell electrode comprising the fuel-cell electrode catalyst according to [1] or [2] and an ionomer.

[4] The fuel cell electrode according to [3], wherein the coverage rate of the fuel cell electrode catalyst by the ionomer is 85% or more.

[5] A polymer electrolyte fuel cell comprising the fuel cell electrode according to [3] or [4] as a cathode, an anode, and a polymer electrolyte membrane.

[6] A method for producing a fuel-cell electrode catalyst comprising an adsorption-support step in which a catalyst metal complex is adsorbed to and supported on a support having pores, wherein
at least 80% of the support has a primary particle size within ± 75 % of the mean primary particle size of the support,
the catalyst metal complex has a mean particle size within ± 75 % of the mean pore size of the support,
at least 80% of the support has a primary particle size ranging from 10 nm to 20 nm,
the support has a mean pore size ranging from 2 nm to 4 nm, and
the catalyst metal complex has a mean particle size ranging from 2 nm to 4 nm.

[7] The method according to [6], wherein the support is carbon.

[8] The method according to [6] or [7], wherein the catalyst metal complex contains dinitrodiammine platinum.

**Effect of the Invention**

According to the present invention, a fuel-cell electrode catalyst in which a catalyst metal is uniformly supported on a support and a method for producing the same can be provided.

**Brief Description of the Drawings**

Fig. 1 shows the adsorption rate of platinum complexes in fuel-cell electrode catalysts.
Fig. 2 shows the normalized dispersity of platinum supported on carbon black.
Fig. 3 shows the coverage rates of fuel-cell electrode catalysts by the ionomer.
Fig. 4 shows oxygen diffusion resistance in fuel cell electrodes.
Fig. 5 shows cell output.

**Embodiments for Carrying Out the Invention**

Hereafter, the present invention is described in detail.

<Fuel-cell electrode catalyst>

The present invention relates to a fuel-cell electrode catalyst containing a support having pores and a catalyst metal uniformly supported on the support (hereinafter, also simply referred to as "electrode catalyst").

The support of the present invention has a narrow particle size distribution (monodisperse). Specifically, at least 80% of the support has a primary particle size within ± 75 % of the mean primary particle size of the support. For example, when 10 support particles have a mean primary particle size of 10 nm, at least 8 support particles have a primary particle size ranging from 2.5 nm to 17.5 nm.

The "mean primary particle size" of support, as used herein, can be determined on the basis of the primary particle sizes of 100 support particles randomly selected from 10 visual fields observed using a field emission scanning electron microscope (FE-SEM). Specifically, the mean primary particle size can be determined by measuring the primary particle sizes of the selected 100 support particles, excluding the top 10 support particles and the bottom 10 support particles in terms of primary particle size, and then dividing the sum of the primary particle sizes of the resulting 80 support particles by 80.

In addition, the term "primary particle size" of support refers to an equivalent circle diameter. Specifically, an individual support area is measured, and then the diameter of a circle having the same area as that of the measured support area is determined to be the primary particle size of the support.

By using the support having narrow particle size distribution, an electrode catalyst on which a catalyst metal is uniformly supported can be provided. When a fuel cell electrode is produced, an electrode catalyst is covered by an ionomer. With the use of the electrode catalyst according to the present invention, the coverage rate of the electrode catalyst by the ionomer can be increased. As a result, a synergistic effect exerted by the support having a narrow particle size distribution, the catalyst metal uniformly supported on the support, and the ionomer of high-level coverage can lower the oxygen diffusion resistance of the fuel cell electrode and improve the performance of the fuel cell.

Though the particle size distribution of the support is not particularly limited, at least 80% of the support preferably has a primary particle size within ± 60 % of the mean primary particle size of the support, more preferably has a primary particle size within ± 50 % of the mean primary particle size of the support, and particularly preferably has a primary particle size within ± 35 % of the mean primary particle size of the support.

Specifically, at least 80% of the support preferably has a primary particle size within ± 10 nm from the mean primary particle size of the support, more preferably has a primary particle size within ± 7.5 nm from the mean primary particle size of the support, and particularly preferably has a primary particle size within ± 5 nm from the mean primary particle size of the support.

More specifically, at least 80% of the support has a primary particle size ranging from 10 nm to 20 nm.

In the case where the particle size distribution of a catalyst metal supported on the support is evaluated by a small angle X-ray scattering method (SAXS), the normalized dispersity is 24% or less. The performance of the fuel cell can further be improved by having such a normalized dispersity. Though the lower limit of the normalized dispersity is not particularly limited, it may be 5%, 10%, 15% or the like, for example.

The small angle X-ray scattering method is an analytical technique for evaluating the structure of the substance, which involves measuring scattered X-rays that appear within a low-angle region with $2\theta < 10°$ or lower after irradiation of a substance with X-rays. By using the small angle X-ray scattering method, the mean particle size and the particle size distribution of a catalyst metal can be measured.

The term "normalized dispersity" in the description refers to a percentage of a value obtained by dividing a half-value width (the half value of a peak) of the particle size distribution by the mean particle size of the catalyst metal calculated from a peak as measured by small angle X-ray scattering. As an example, when the mean particle size of a catalyst metal is 5 nm and its half-value width is 1.5 nm, the normalized dispersity is represented by 30% because the variation range is ± 30% from the mean value.

A normalized dispersity can be calculated using analytical software. For example, nano-solver (Rigaku Corporation) can be used. Regarding the normalized dispersity, see also JP Patent Publication (Kokai) No. 2013-118049A.

Though the supporting density of a catalyst metal is not particularly limited, it can be 5 to 70 wt%, preferably 30 to 50 wt%, based on the total weight of the support and the catalyst metal, for example.

The support has pores and carbon is used. More specifically, examples include carbon black.

The type of a catalyst metal is not particularly limited, as long as it can exert the functions as a fuel cell electrode catalyst. Examples of the catalyst metal include noble metals, such as platinum and palladium. Alternatively, examples of the catalyst metal include transition metals such as cobalt, manganese, nickel, and iron. As the catalyst metal, a noble metal alone or a combination of a noble metal and a transition metal may be used.

<Fuel cell electrode>

The present invention also relates to a fuel cell electrode containing the above electrode catalyst and ionomer (hereinafter, may also be simply referred to as "electrode").

As described above, in an electrode according to the present invention, the coverage rate of an electrode catalyst by an ionomer can be increased. The oxygen diffusion resistance can be lowered by increasing the coverage rate. Moreover, cracking in the electrode can be inhibited by increasing the coverage rate.

The coverage rate by the ionomer is preferably 85% or more, more preferably 90% or more, and particularly preferably 95% or more.

The coverage rate of the electrode catalyst by the ionomer can be determined with the amount of carbon monoxide (CO) adsorbed to the electrode catalyst (specifically, catalyst metal). Specifically, [A] the amount of CO adsorbed to the electrode catalyst covered by the ionomer, and [B] the amount of CO adsorbed to the electrode catalyst not covered by the ionomer are separately measured, and then the coverage rate can be calculated with the following formula.

$$\text{Coverage rate (\%)} = [1-(A/B)] \times 100$$

Since CO is adsorbed to the catalyst metal, CO is not adsorbed if the electrode catalyst is entirely covered by the ionomer.

Though the type of the ionomer is not particularly limited, examples thereof include, Nafion® DE2020, DE2021, DE520, DE521, DE1020 and DE1021 (Du Pont), and Aciplex® SS700C/20, SS900/10 and SS1100/5 (Asahi Kasei Chemicals Corporation).

<Fuel cell>

The present invention also relates to a fuel cell containing the above electrode and electrolyte. Examples of the type of the fuel cell include a polymer electrolyte fuel cell (PEFC), a phosphoric acid fuel cell (PAFC), a molten carbonate fuel cell (MCFC), a solid oxide fuel cell (SOFC), an alkaline electrolyte fuel cell (AFC), and a direct fuel cell (DFC). The above electrode can also be used as a cathode, as an anode, or as both a cathode and an anode.

Preferably, the present invention relates to a polymer electrolyte fuel cell containing the above electrode as a cathode, an anode, and a polymer electrolyte membrane.

As described above, in the fuel cell according to the present invention, oxygen diffusion resistance in the electrode can be lowered by a synergistic effect exerted by a support having a narrow particle size distribution, a catalyst metal uniformly supported on the support, and an ionomer of high-level coverage. As a result, the performance of the fuel cell can be improved.

The oxygen diffusion resistance is preferably 96 s/m or less, more preferably 93 s/m or less, further preferably 90 s/m or less, and particularly preferably 87 s/m or less. Though the lower limit of the oxygen diffusion resistance is not particularly limited, it may be 40 s/m, 50 s/m, 60 s/m, 70 s/m or the like, for example.

The oxygen diffusion resistance can be calculated by supplying humidified and low-oxygen simulated gas that has been passed through a bubbler heated at 80°C (oxygen 5 ccm, nitrogen 1700 ccm) to a cathode, supplying humidified hydrogen that has been passed through the bubbler heated at 80°C (500 ccm) to an anode, and then measuring limiting current density (current value with which voltage becomes zero) using a current loading apparatus.

The fuel cell according to the present invention may further contain separators. Unit cells, in which a membrane electrode assembly (MEA) composed of a pair of electrodes (cathode and anode) and an electrolyte membrane are sandwiched by a pair of separators, are stacked to form a cell stack. By forming the cell stack, high electric power can be obtained.

<Method for producing a fuel-cell electrode catalyst>

The present invention also relates to a method for producing the above electrode catalyst, comprising an adsorption-support step in which a catalyst metal complex is adsorbed to and supported on a support having pores.

In the production method according to the present invention, the support having a narrow particle size distribution is used. Specifically, the support to be used herein is characterized in that at least 80% of the support has a primary particle size within ± 75 % of the mean primary particle size of the support.

Also, in the production method according to the present invention, a catalyst metal complex having a mean particle size equivalent to the mean pore size of the support is used. Specifically, the catalyst metal complex to be used herein has a mean particle size within ± 75 % of the mean pore size of the support.

The "mean pore size" of the support in the description can be determined by conducting BET analysis of isotherm data obtained by $N_2$ gas adsorption measurement.

The "mean particle size" of the catalyst metal complex in the description can be determined by dynamic light scattering (DLS).

As described above, by using the support having a narrow particle size distribution and the catalyst metal complex having a mean particle size equivalent to the mean pore size of the support, the uniform adsorption of the catalyst metal complex to the support can be achieved. Moreover, the uniform adsorption of the catalyst metal complex enables improvement in adsorption rate of the catalyst metal complex to the support. For example, the catalyst metal complex can be adsorbed to the support with the adsorption rate of 70% or more, preferably 80% or more, and more preferably 85% or more.

Though the particle size distribution of the support is not particularly limited, at least 80% of the support preferably has a primary particle size within ± 60 % of the mean primary particle size of the support, more preferably has a primary particle size within ± 50 % of the mean primary particle size of the support, and particularly preferably has a primary particle size within ± 35 % of the mean primary particle size of the support.

Specifically, at least 80% of the support preferably has a primary particle size within ± 10 nm from the mean primary particle size of the support, more preferably has a primary particle size within ± 7.5 nm from the mean primary particle size of the support, and particularly preferably has a primary particle size within ± 5 nm from the mean primary particle size of the support.

More specifically, at least 80% of the support has a primary particle size ranging from 10 nm to 20 nm.

Though the mean particle size of the catalyst metal complex is not particularly limited, the catalyst metal complex preferably has a mean particle size within ± 60 % of the mean pore size of the support, more preferably has a mean particle size within ± 50 % of the mean pore size of the support, and particularly preferably has a mean particle size within ± 35 % of the mean pore size of the support.

Specifically, the catalyst metal complex preferably has a mean particle size within ± 2 nm from the mean pore size of the support, more preferably has a mean particle size within ± 1.5 nm from the mean pore size of the support, and particularly preferably has a mean particle size within ± 1 nm from the mean pore size of the support.

More specifically, both the mean particle size of the catalyst metal complex and the mean pore size of the support range from 2 nm to 4 nm.

Thought the type of the support is not particularly limited as long as it has pores, carbon is preferably used. More specifically, examples thereof include carbon black and the like. Alternatively, as a support, a metal oxide such as silica or titania can also be used.

The type of the catalyst metal complex is not particularly limited as long as the catalyst metal contained in the complex can exert the functions as a fuel cell electrode catalyst. Examples of the catalyst metal complex include complexes containing noble metals such as platinum and palladium. Further examples of the catalyst metal complex include complexes containing transition metals such as cobalt, manganese, nickel, and iron. As a catalyst metal complex, only a complex containing a noble metal may be used, or a combination of a complex containing a noble metal and a complex containing a transition metal may be used. An example of the catalyst metal complex is dinitrodiammine platinum.

The mean particle size of the catalyst metal complex can be appropriately varied by changing central metal and ligand types. Accordingly, a catalyst metal complex can be selected depending on the mean pore size of the support.

Though it is not particularly limited, when carbon is used as the support, dinitrodiammine platinum is preferably used. The use of a dinitrodiammine platinum nitric acid solution having a platinum concentration of 1 g/L and absorbance at 420 nm ranging from 1.5 to 3 is more preferable. Further preferably, the alkali consumption of the dinitrodiammine platinum nitric acid solution ranges from 0.15 to 0.35. Such dinitrodiammine platinum nitric acid solution can be prepared according to the method described in JP Patent Publication (Kokai) No. 2005-306700 A.

The catalyst metal complex adsorbed to the support can be supported on the support through reduction reaction. Examples of a reducing agent include, but are not particularly limited to, ethanol, propanol, sodium borohydride, hydrazine, formic acid and the like.

A reduction reaction can be performed at temperatures ranging from 60°C to the boiling point of a dispersive medium, for example. An example of a dispersive medium is a mixed solution of water and nitric acid.

## Examples

Hereafter, the present invention is described in greater detail with reference to examples and comparative examples, however, the technical scope of the present invention is not limited to these examples.

<Production of a fuel-cell electrode catalyst>

[Example 1]

14 g of carbon black powder having a narrow particle size distribution (mean primary particle size: 15 nm, mean pore size: 2 nm) was dispersed in an aqueous solution prepared by mixing 5 g to 20 g of nitric acid (concentration: 60 wt%) and 500 g to 1500 g of pure water. The dispersion was mixed with a dinitrodiammine platinum nitric acid solution (platinum amount: 6 g, mean particle size: 2 nm) for adsorption to carbon black. The mixture was mixed with ethanol (concentration: 99.5%) as a reducing agent, heated to 60°C to 90°C, and then maintained for 1 to 8 hours. Thereafter, the mixture was left to natural cooling to 40°C or lower, and then filtered. The filter cake was washed with pure water until the filtrate had a pH of 4 to 5 and the electrical conductivity of the filtrate became 50 μS. The washed filter cake was dried at 90°C for 15 hours. Thereafter, in an argon gas, the temperature was increased from 100°C to 1000°C at a rate of 5°C/minute, and then maintained for 1 to 5 hours, and thus an electrode catalyst was obtained.

The carbon black used in example 1 had a primary particle size ranging from 10 nm to 20 nm as observed by 10-visual-field observation with FE-SEM.

[Comparative example 1]

An electrode catalyst was obtained in a manner similar to that in example 1, except that carbon black powder having a wide particle size distribution (mean primary particle size: 40 nm, mean pore size: 2 nm) was used instead of the carbon black powder having a narrow particle size distribution in example 1.

The carbon black used in comparative example 1 had a primary particle size ranging from 10 nm to 100 nm as observed by 10-visual-field observation with FE-SEM.

[Comparative example 2]

14 g of carbon black powder having a narrow particle size distribution (mean primary particle size: 15 nm, mean pore size: 2 nm) was dispersed in 500 g of pure water. The dispersion was mixed with a chloroplatinic acid solution (platinum amount: 6 g, mean particle size: 2 nm). An aqueous ammonia solution as a base was added to the mixture until the pH became 9 for neutralization and sedimentation. The precipitate was filtered. The filter cake was dried at 90°C for 15 hours. Thereafter, in an argon gas, the temperature was increased from 100°C to 1000°C at a rate of 5°C/minute and then maintained for 1 to 5 hours, and thus an electrode catalyst was obtained.

The carbon black used in comparative example 2 had a primary particle size ranging from 10 nm to 20 nm, as observed by 10-visual-field observation with FE-SEM.

[Comparative example 3]

An electrode catalyst was obtained in a manner similar to that in comparative example 2, except that carbon black powder having a wide particle size distribution (mean primary particle size: 40 nm, mean pore size: 2 nm) was used instead of the carbon black powder having a narrow particle size distribution described in comparative example 2.

The carbon black used in comparative example 3 had a primary particle size ranging from 10 nm to 100 nm, as observed by 10-visual-field observation with FE-SEM.

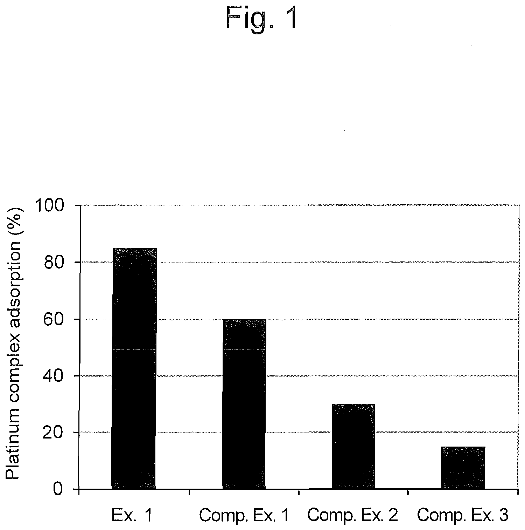

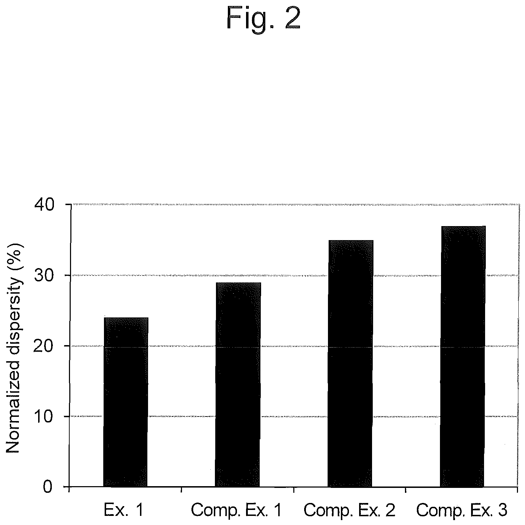

Results including the adsorption rate of the platinum complexes and the normalized dispersity of platinum supported on carbon black of the electrode catalysts obtained in the example and the comparative examples are shown in Tables 1 and 2 and Figs. 1 and 2.

The adsorption rate of a platinum complex was determined by measuring the amount of platinum discharged into a filtrate by atomic absorption spectrometry, and then subtracting the amount of platinum in the filtrate from the amount of platinum introduced.

The method for measuring the normalized dispersity of platinum supported on carbon black is as described above, and nano-solver (Rigaku Corporation) was used as analytical software.

[Table 1]

| | Supporting method | Support | Support mean pore size (nm) | Platinum complex mean primary particle size (nm) |
|---|---|---|---|---|
| Example 1 | Adsorption | Monodisperse carbon | 2 | 2 |
| Comp. Ex. 1 | Adsorption | Polydisperse carbon | 2 | 2 |
| Comp. Ex. 2 | Sedimentation | Monodisperse carbon | 2 | 2 |
| Comp. Ex. 3 | Sedimentation | Polydisperse carbon | 2 | 2 |

[Table 2]

|  | Platinum complex adsorption rate (%) | Normalized dispersity (%) |
|---|---|---|
| Example 1 | 85 | 24 |
| Comp. Ex. 1 | 60 | 29 |
| Comp. Ex. 2 | 30 | 35 |
| Comp. Ex. 3 | 15 | 37 |

<Production of a single cell>

Each of the electrode catalysts obtained in the example and the comparative examples was dispersed in an organic solvent, and then an ionomer was added. The dispersion was subjected to ultrasonic treatment and then applied to a Teflon sheet so that the amount of platinum per $cm^2$ electrode was 0.2 mg, thereby producing an electrode.

A single cell was produced by bonding a pair of electrodes together by hot pressing via a polymer electrolyte membrane, and then installing a diffusion layer on the outside of each electrode.

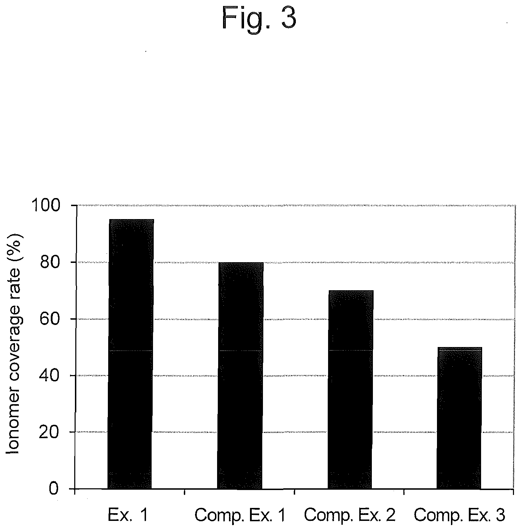

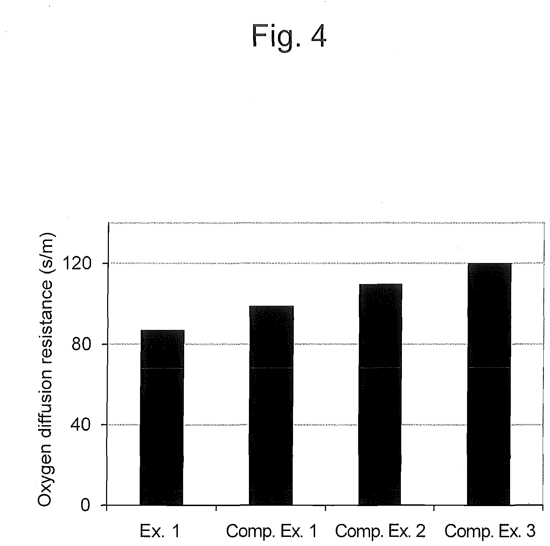

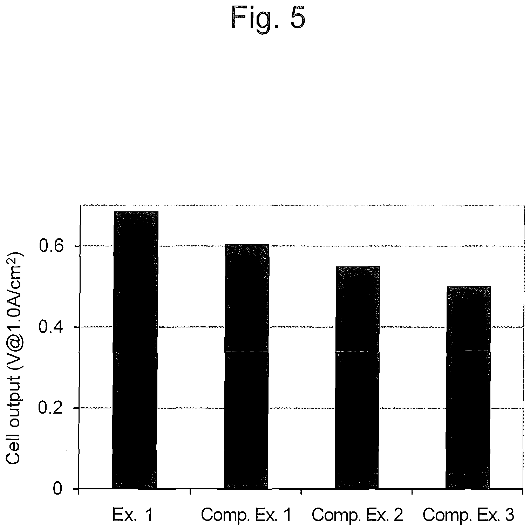

The results including the coverages rate by ionomers, oxygen diffusion resistance, and the cell output of the single cells produced using each of the electrode catalysts obtained in the example and the comparative examples are shown in Table 3 and Figs. 3 to 5.

The coverage rate of each electrode catalyst by the ionomer was determined by measuring the amount of carbon monoxide adsorbed to powder obtained by scraping each electrode using a spatula. The specific method is as described above.

The method for measuring oxygen diffusion resistance is as described above. Oxygen diffusion resistance was calculated by measuring limiting current density using a current loading apparatus.

Cell output was determined by supplying the humidified air that had been passed through a bubbler heated at 80°C (2000 ccm) to a cathode, supplying humidified hydrogen that had been passed through a bubbler heated at 80°C (500 ccm) to an anode and measuring voltage at 1.0 A/$cm^2$ by generating electric power using a current loading apparatus.

[Table 3]

|  | Ionomer coverage rate (%) | Oxygen diffusion resistance (s/m) | Cell output (V@1.0A/$cm^2$) |
|---|---|---|---|
| Example 1 | 95 | 87 | 0.685 |
| Comp. Ex. 1 | 80 | 99 | 0.604 |
| Comp. Ex. 2 | 70 | 110 | 0.550 |
| Comp. Ex. 3 | 50 | 120 | 0.500 |

Claims

1.  A fuel-cell electrode catalyst comprising a support having pores and a catalyst metal uniformly supported on the support, wherein
at least 80% of the support has a primary particle size within ± 75 % of the mean primary particle size of the support,
at least 80% of the support has a primary particle size ranging from 10 nm to 20 nm,
the catalyst metal supported on the support has a normalized dispersity of 24% or less, and
the support is carbon.

2.  The fuel-cell electrode catalyst according to claim 1, wherein the catalyst metal contains platinum.

3.  A fuel cell electrode comprising the fuel-cell electrode catalyst according to claim 1 or 2 and an ionomer.

4.  The fuel cell electrode according to claim 3, wherein the coverage rate of the fuel cell electrode catalyst by the ionomer is 85% or more.

5.  A polymer electrolyte fuel cell comprising the fuel cell electrode according to claim 3 or 4 as a cathode, an anode, and a polymer electrolyte membrane.

**6.** A method for producing a fuel-cell electrode catalyst comprising an adsorption-support step in which a catalyst metal complex is adsorbed to and supported on a support having pores, wherein
at least 80% of the support has a primary particle size within $\pm$ 75 % of the mean primary particle size of the support,
the catalyst metal complex has a mean particle size within $\pm$ 75 % of the mean pore size of the support,
at least 80% of the support has a primary particle size ranging from 10 nm to 20 nm,
the support has a mean pore size ranging from 2 nm to 4 nm, and
the catalyst metal complex has a mean particle size ranging from 2 nm to 4 nm.

**7.** The method according to claim 6, wherein the support is carbon.

**8.** The method according to claim 6 or 7, wherein the catalyst metal complex contains dinitrodiammine platinum.

**Patentansprüche**

**1.** Brennstoffzellenelektrodenkatalysator, umfassend einen Träger, der Poren hat, und ein Katalysatormetall, das gleichmäßig auf dem Träger getragen wird, wobei
mindestens 80 % des Trägers eine Primärteilchengröße innerhalb von $\pm$ 75 % der durchschnittlichen Primärteilchengröße des Trägers haben,
mindestens 80 % des Trägers eine Primärteilchengröße im Bereich von 10 nm bis 20 nm haben,
das Katalysatormetall, das auf dem Träger getragen wird, eine normalisierte Dispersität von 24 % oder weniger hat und
der Träger Kohlenstoff ist.

**2.** Brennstoffzellenelektrodenkatalysator nach Anspruch 1, wobei das Katalysatormetall Platin enthält.

**3.** Brennstoffzellenelektrode, umfassend den Brennstoffzellenelektrodenkatalysator nach Anspruch 1 oder 2 und ein Ionomer.

**4.** Brennstoffzellenelektrode nach Anspruch 3, wobei der Deckungsgrad des Brennstoffzellenelektrodenkatalysators durch das Ionomer 85 % oder mehr ist.

**5.** Polymerelektrolytbrennstoffzelle, umfassend die Brennstoffzellenelektrode nach Anspruch 3 oder 4 als eine Kathode, eine Anode und eine Polymerelektrolytmembran.

**6.** Verfahren zum Herstellen eines Brennstoffzellenelektrodenkatalysators, umfassend einen Adsorptions-Trageschritt, in dem ein Katalysatormetallkomplex in einem Träger mit Poren adsorbiert ist und darauf getragen wird, wobei
mindestens 80 % des Trägers eine Primärteilchengröße innerhalb von $\pm$ 75 % der durchschnittlichen Primärteilchengröße des Trägers haben,
der Katalysatormetallkomplex eine durchschnittliche Teilchengröße innerhalb von $\pm$ 75 % der durchschnittlichen Porengröße des Trägers hat,
mindestens 80 % des Trägers eine Primärteilchengröße im Bereich von 10 nm bis 20 nm haben,
der Träger eine durchschnittliche Porengröße im Bereich von 2 nm bis 4 nm hat und
der Katalysatormetallkomplex eine durchschnittliche Teilchengröße im Bereich von 2 nm bis 4 nm hat.

**7.** Verfahren nach Anspruch 6, wobei der Träger Kohlenstoff ist.

**8.** Verfahren nach Anspruch 6 oder 7, wobei der Katalysatormetallkomplex Dinitrodiamminplatin enthält.

**Revendications**

**1.** Catalyseur d'électrode de pile à combustible comprenant un support ayant des pores et un métal de catalyseur supporté uniformément sur le support, dans lequel
au moins 80 % du support présente une taille de particule primaire dans un intervalle de $\pm$ 75 % de la taille moyenne de particule primaire du support,
au moins 80 % du support présente une taille de particule primaire allant de 10 nm à 20 nm,
le métal de catalyseur sur le support présente un degré de dispersion normalisé de 24 % ou moins, et

le support est en carbone.

2. Catalyseur d'électrode de pile à combustible selon la revendication 1, dans lequel le métal de catalyseur contient du platine.

3. Électrode de pile à combustible comprenant le catalyseur d'électrode de pile à combustible selon la revendication 1 ou 2 et un ionomère.

4. Électrode de pile à combustible selon la revendication 3, dans laquelle le taux de couverture du catalyseur d'électrode de pile à combustible par l'ionomère est de 85 % ou plus.

5. Pile à combustible à électrolyte en polymère comprenant l'électrode de pile à combustible selon la revendication 3 ou 4 en tant que cathode, une anode et une membrane d'électrolyte en polymère.

6. Procédé de production d'un catalyseur d'électrode de pile à combustible comprenant une étape d'adsorption-support dans laquelle un complexe métallique de catalyseur est adsorbé et supporté sur un support ayant des pores, dans lequel
au moins 80 % du support présente une taille de particule primaire dans un intervalle de ± 75 % de la taille moyenne de particule primaire du support,
le complexe métallique de catalyseur présente une taille moyenne de particule dans un intervalle de ± 75 % de la taille moyenne de pore du support,
au moins 80 % du support présente une taille de particule primaire allant de 10 nm à 20 nm,
le support présente une taille moyenne de pore allant de 2 nm à 4 nm, et
le complexe métallique de catalyseur présente une taille moyenne de pore allant de 2 nm à 4 nm.

7. Procédé selon la revendication 6, dans lequel le support est en carbone.

8. Procédé selon la revendication 6 ou 7, dans lequel le complexe métallique de catalyseur contient du dinitrodiammine-platine.

# Fig. 1

# Fig. 2

# Fig. 3

Fig. 4

# Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013109848 A
- WO 2006110822A2 A
- US 2012135137 A1
- JP 2013118049 A
- JP 2005306700 A

**Non-patent literature cited in the description**

- **YAMAMOTO et al.** *J. Non-Cryst. Solids,* 2006, vol. 352 (26), 2929-2932